# EUROPEAN PATENT APPLICATION

(11) **EP 3 798 689 A1**
(43) Date of publication of application: **31.03.2021**
(21) Application number: 19199238.7
(22) Date of filing: 24.09.2019
(51) Int. Cl.: G02B 3/00, F21V 5/00, F21V 5/04, G02B 3/06, G02B 19/00

(54) **OPTICAL ELEMENT, LIGHTING DEVICE, LUMINAIRE AND DESIGN METHOD THEREOF**

(71) Applicant: Signify Holding B.V., 5656 AE Eindhoven (NL)
(72) Inventor: The designation of the inventor has not yet been filed
(74) Representative: Verweij, Petronella Daniëlle

(57) **Abstract**

A non-imaging optical element (30) is disclosed comprising a body (31) for collimating light from a light source (20), said body comprising a first surface (32) for receiving light from said light source and a second surface (34) opposing the first surface, said second surface carrying a lenslet array for reshaping said collimated light, the lenslet array comprising a plurality of lenslets (35), each lenslet having a focal length (f) and an apex (36) opposite said second surface, the first surface comprising at least one surface defect (33') causing an optical artefact in said collimated light, wherein a distance (H) between any of said surface defects and the apex of any lenslet is at least said focal length. Also disclosed is a lighting device comprising such an optical element, a luminaire comprising such a lighting device and a method of designing such an optical element.

## Description

### FIELD OF THE INVENTION

The present invention relates to a non-imaging optical element comprising a body for collimating light from a light source, said body comprising a first surface for receiving light from said light source and a second surface opposing the first surface, said second surface carrying a lenslet array for reshaping said collimated light, the lenslet array comprising a plurality of lenslets, each lenslet having a focal length and an apex opposite said second surface.

The present invention further relates to a lighting device comprising such a non-imaging optical element.

The present invention further relates to a luminaire comprising such a lighting device.

The present invention further relates to a method of designing such a non-imaging optical element.

### BACKGROUND OF THE INVENTION

In many application domains such as for example fashion retail, accent lighting is considered critically important to achieve an attractive shopping environment for customers. Such accent lighting typically requires the creation of narrow angle light beams to provide a light accent onto an object of potential interest to a customer. When using solid state lighting elements such as LEDs, such narrow angle light beams require the use of optical elements to reshape the (Lambertian) luminous distribution of such lighting elements into narrow light beams, e.g. light beams with beam angles of 60° or less, such as beam angles of 12° or less.

In the aforementioned application domains, it is typically desired that the lighting devices producing such narrow light beams are compact and unobtrusive, whilst at the same time providing light beams of high quality, i.e. with minimal visible optical defects such as halos, glare, beam shape, inhomogeneity in beam spot colour and intensity, and so on. In reality, these requirements are conflicting because in order to obtain such high quality light beams, large optical elements are typically required. This can be understood from the étendue principle, which dictates the dimensions of an optical element with a defined optical performance to be used in conjunction with a light source of a given size, assuming minimal light losses.

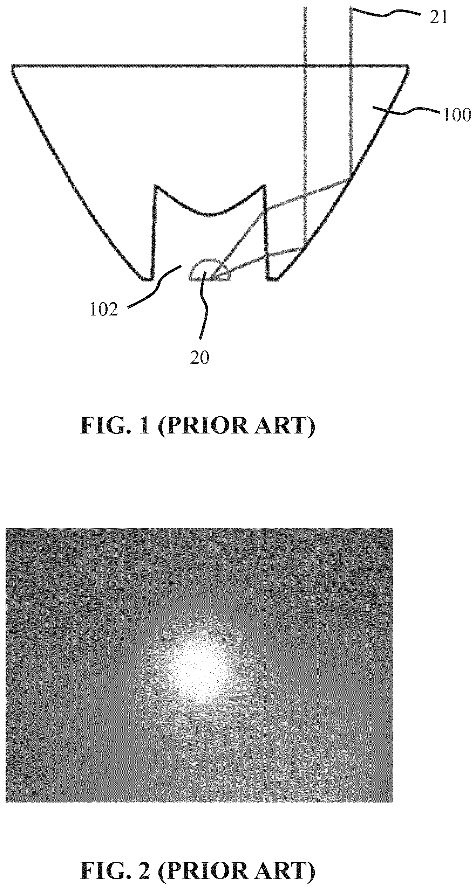

An example of a known optical element providing good optical performance is shown in FIG. 1. The lens 100 is based on the principle of total internal reflection (TIR) of the light beams 21 generated with the light source 20 positioned in the cavity 102 of the lens 100. FIG. 2 depicts an image of the light beam generated with a lighting device comprising the lens 100 and light source 20, from which it can be seen that such a lighting device can produce a light beam of high quality, i.e. comprising minimal optical aberrations. However, the TIR lens 100 is rather bulky and allows for little design freedom in the tolerances of its light emitting surface. Moreover, the required dimensions of the cavity 102 are typically such that the light source 20 is in close vicinity to the material of the TIR lens 100, which can cause thermal degradation of the lens material, leading to yellowing of this material and loss of optical performance as a consequence.

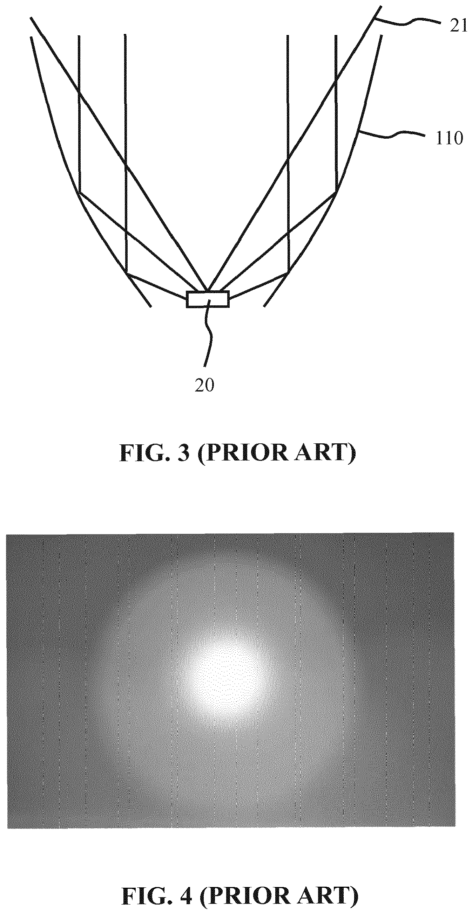

Another known solution is schematically depicted in FIG. 3, in which the light beams 21 of the light source 20 are reflected by a reflector 110 in order to reshape the luminous output of the light source 20 into its desired shape. However, such reflectors 110 are typically thick and can also suffer from thermal degradation of the reflector material. Moreover, the optical performance of such reflectors 110 is inferior to that of for example the TIR lens 100, as the light beam produced by such a reflector arrangement typically leads to the generation of a large halo around the primary light beam as shown in the image in FIG. 4.

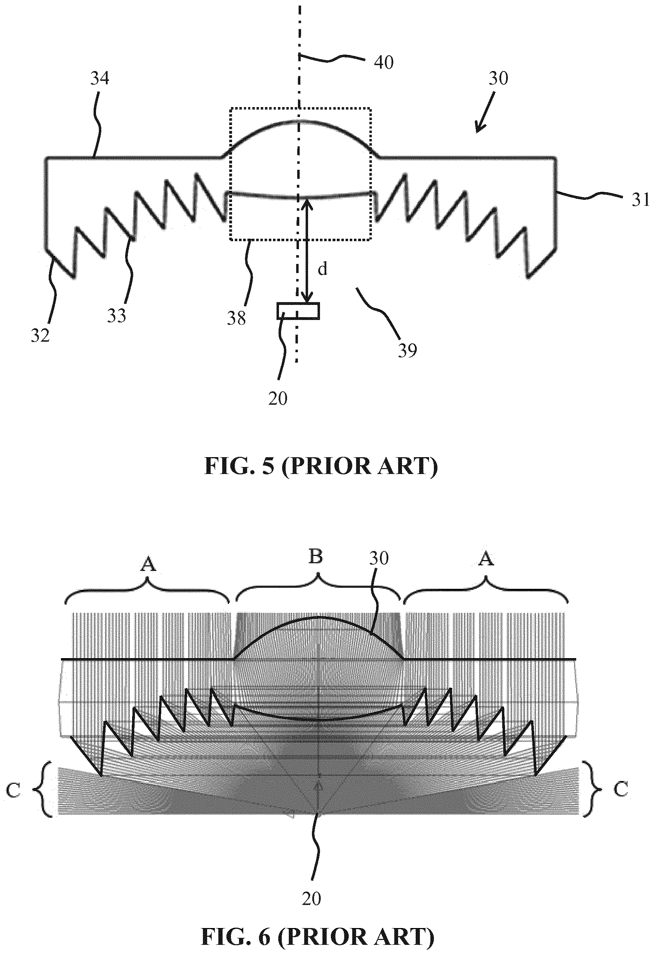

A commonly preferred optical element for the purpose of reshaping the luminous distribution of solid state lighting element such as a LED is a so-called Fresnel lens 30, a cross-sectional view of which is schematically depicted in FIG. 5, and its optical performance is schematically depicted in FIG. 6. Fresnel lenses are preferred because they are compact and can exhibit good optical performance. A typical Fresnel lens 30 comprises a central region 38 centred around the optical axis 40 of the Fresnel lens 30, which central region refracts a fraction of the light from the light source 20 incident on its light receiving surface 32 and transmits the refracted light from its light exiting surface 34 opposing the light receiving surface 32 to produce portion B of the light beam generated by the Fresnel lens 30. Surrounding the central region 38 are one or more Fresnel prisms or teeth 33, which usually are shaped as annular concentric rings around the central region 38 of the Fresnel lens 30 and give the Fresnel lens 30 its compact nature. The Fresnel prisms or teeth 33 operate on the principle of total internal reflection and transmit the internally reflected light portion originating from the light source 20 through the light exiting surface 34 of the Fresnel lens 30 to produce portion A of the light beam generated by the Fresnel lens 30. Portion C of the luminous distribution produced by the light source 20 is not captured by the Fresnel lens 30 and as such can be considered light losses.

The body 31 of the Fresnel lens 30 comprising the central region 38 and the Fresnel prisms or teeth 33 commonly acts as a collimator of the incident light produced by the light source 20, although this is not strictly necessary. The light source 20 is typically positioned on the optical axis 40 within a cavity 39 of the Fresnel lens 30. Due to the typical dimensions of the Fresnel lens 30, the cavity 39 is sufficiently large such that the minimum distance d between the light emitting surface of the light source 20 and the light receiving surface 32 of the Fresnel lens 30 is large enough to prevent thermal degradation of the lens material of the Fresnel lens 30. As will be readily understood by the skilled person, where the Fresnel lens 30 acts as a collimator, the light source 20 is typically positioned at the focal point of the Fresnel lens 30 on the optical axis 40. However, where such a Fresnel lens 30 is used to generate light beams having narrow beam angles, e.g. beam angles of 60° or less such as beam angles of 30° or less, e.g. by the provision of a lenslet array on the light exiting surface 34 of the Fresnel lens 30, it has been found that significant optical artefacts can occur in the light beam generated with such a lens.

### SUMMARY OF THE INVENTION

The present invention seeks to provide a non-imaging optical element that can produce light beams with narrow beam angles and minimal optical aberrations.

The present invention further seeks to provide a lighting device comprising such a non-imaging optical element.

The present invention further seeks to provide a luminaire comprising such a lighting device.

The present invention further seeks to provide a method of designing such a non-imaging optical element.

According to an aspect, there is provided a non-imaging optical element comprising a body for collimating light from a light source, said body comprising a first surface for receiving light from said light source and a second surface opposing the first surface, said second surface carrying a lenslet array for reshaping said collimated light, the lenslet array comprising a plurality of lenslets, each lenslet having a focal length and an apex opposite said second surface, the first surface comprising at least one surface defect causing an optical artefact in said collimated light, wherein a distance between any of said surface defects and the apex of any lenslet is at least said focal length.

The present invention is based on the insight that optical artefacts in the luminous output of such a non-imaging optical element may be caused by surface defects on the first surface (the light receiving surface) of the optical element, which surface defects cause imperfections in the luminous output of the non-imaging optical element. In the context of the present application, where reference is made to a surface defect, it should be understood that this is to include a deviation from an intended shape of the surface, as the inventors of the present invention have realized that during the production of such a non-imaging optical element, e.g. through molding the non-imaging optical element in a mold, certain portions of the mold may not be (entirely) filled with the filler material, this leading to such surface defects, i.e. deviations from the intended shape, of the first surface of the non-imaging optical element. It has surprisingly been found that the negative impact of such surface defects on the optical quality of the light beam produced by such a non-imaging optical element can be drastically reduced or even nullified by ensuring that the minimum distance of any such surface defect to the apex of any of the lenslets is at least the focal length of such lenslets.

In at least some embodiments, the non-imaging optical element is arranged to generate a light beam having a beam angle in a range of 6-60°, preferably in a range of 6-36°. This renders a non-imaging optical element that is particularly suitable for use in application domains that require high quality narrow light beams, e.g. retail environments such as a fashion retail environment.

Preferably, said distance (H) is at least the focal length (f) corresponding to a 6° beam angle. This has the advantage that the body of such a non-imaging optical element may be reused for embodiments of the non-imaging optical element designed to produce larger beam angles, as for such larger beam angles the focal length of the lenslets of the lenslet array is smaller. In other words, by designing the body of the non-imaging optical element for the smallest beam angle (corresponding to the largest focal length) in a range of beam angles to be covered by an optical element product range based on the non-imaging optical element according to embodiments of the present invention, the tooling for the production of such a range of non-imaging optical element may be based on a single mold design for the respective bodies of the non-imaging optical elements within such a product range, thereby significantly reducing design and tooling costs and the cost of the non-imaging optical element as a consequence.

The non-imaging optical element may be molded from an optical grade polymer, such as polycarbonate, polypropylene, polyethylene terephthalate, and so on. This has the advantage that a particularly lightweight and low cost non-imaging optical element can be provided.

In preferred embodiments, the non-imaging optical element is a Fresnel lens having an optical axis with the first surface comprising a plurality of annular concentric Fresnel teeth around said optical axis. This yields a particularly compact lens with a high optical performance.

The Fresnel lens may have a refractive central region centered on said optical axis, such that the annular concentric Fresnel teeth are located around said central region. This further improves the optical performance of the lens, whilst ensuring a large cavity for housing a light source, thereby reducing the risk of thermal damage of the lens caused by the light source in operation.

The surface defects may be deformations of the respective tips of the annular concentric Fresnel teeth, which for instance may be caused by incomplete filling of a mold in which the Fresnel lens is made, as previously explained.

In an example embodiment, the Fresnel teeth have a maximum tooth tip deformation width of 0.4 mm, and said distance is at least twice said focal length. It has been found that in embodiments in which the deformations or surface defects are relatively small, optical artefacts in the light beam created with the Fresnel lens can be effectively suppressed if the minimum distance between the surface defects and the apex of any lenslet is at least twice the focal length of the lenslets.

In another example embodiment, the Fresnel teeth have a maximum tooth tip deformation width of 0.9 mm, and said distance is at least 2.5 times said focal length. It has been found that in embodiments in which the deformations or surface defects are relatively large, optical artefacts in the light beam created with the Fresnel lens can be effectively suppressed if the minimum distance between the surface defects and the apex of any lenslet is at least 2.5 times the focal length of the lenslets.

According to another aspect, there is provided a lighting device comprising the non-imaging optical element of any of the herein described embodiments and a solid state light source arranged to couple at least a fraction of its luminous output into the first surface of the body of the non-imaging optical element. Such a lighting device can produce light beams having narrow beam angles, e.g. beam angles of 60° or even 36° or less with minimal optical aberrations, whilst at the same time having a compact form factor.

In an embodiment, the lighting device further comprises a housing containing the solid state light source, said housing comprising a light absorbent surface facing the solid state light source for absorbing a further fraction of its luminous output that is not coupled into the non-imaging optical element. This reduces the amount of stray light produced by the lighting device and therefore further improves the optical quality of the light beam produced with the lighting device.

The solid state light source may be in a LED chip-on-board form.

According to yet another aspect, there is provided a luminaire comprising the lighting device of any of the herein described embodiments. Such a luminaire for example may be a spotlight or the like suitable for accent lighting purposes in suitable application domains, e.g. a retail environment such as a fashion retail environment.

According to yet another aspect, there is provided a method of designing a non-imaging optical element comprising a body for collimating light from a light source, said body comprising a first surface for receiving light from said light source and a second surface opposing the first surface, said second surface carrying a lenslet array for reshaping said collimated light, the lenslet array comprising a plurality of lenslets, each lenslet having a focal length and an apex opposite said second surface, the first surface comprising at least one surface defect causing an optical artefact in said collimated light, wherein a distance between any of said surface defects and the apex of any lenslet is at least a critical focal length, the method comprising providing a design of said body by calculating the dimensions of the body as a function of said critical focal length and a desired light efficiency of said light source; and adding the lenslet array to the second surface of said body, wherein said focal lengths do not exceed the critical focal length. With such a design method, which may be used to produce a mold for producing the non-imaging optical element according to the design, e.g. to provide a method of manufacturing such a non-imaging optical element using such a mold, a design of a compact non-imaging optical element having excellent optical characteristics is provided.

In an embodiment, the non-imaging optical element is a Fresnel lens having an optical axis and the first surface comprises a plurality of annular concentric Fresnel teeth around said optical axis, the method further comprising defining said distance as a function of the maximum tooth tip deformation width of said Fresnel teeth. Such a Fresnel lens design can be used to produce a Fresnel lens that can produce narrow angled beams with minimal optical aberrations.

### BRIEF DESCRIPTION OF THE DRAWINGS

Embodiments of the invention are described in more detail and by way of non-limiting examples with reference to the accompanying drawings, wherein:
Fig. 1 schematically depicts a cross-sectional view of a prior art lighting device including a TIR lens;
Fig. 2 is an image of a light spot as projected onto a white wall and created with the prior art optical device of FIG. 1;
Fig. 3 schematically depicts a cross-sectional view of a prior art lighting device including a reflector;
Fig. 4 is an image of a light spot as projected onto a white wall and created with the prior art optical device of FIG. 3;
Fig. 5 schematically depicts a cross-sectional view of a prior art lighting device including a Fresnel lens;
Fig. 6 schematically depicts a cross-sectional view of a luminous distribution created with the prior art optical device of FIG. 5;
Fig. 7 schematically depicts a cross-sectional view of a mold for producing a typical Fresnel lens;
Fig. 8 schematically depicts a cross-sectional view of a surface defect of a typical Fresnel lens produced with the mold of FIG. 7;
Fig. 9 schematically depicts a cross-sectional view of a lighting device according to an embodiment of the present invention;
Fig. 10 is a graph of a design rule for designing a non-imaging optical element according to an embodiment of the present invention;
Fig. 11(a) is an image of a light beam projected onto a white wall produced with a prior art Fresnel lens;
Fig. 11(b) graphically depicts a luminous distribution along part of the light beam projection in FIG. 11(a);
Fig. 12 is an image of a light beam projected onto a white wall produced with a non-imaging optical element according to an embodiment of the present invention; and
Fig. 13 schematically depicts a cross-sectional view of a lighting device according to another embodiment of the present invention.

### DETAILED DESCRIPTION OF THE EMBODIMENTS

It should be understood that the Figures are merely schematic and are not drawn to scale. It should also be understood that the same reference numerals are used throughout the Figures to indicate the same or similar parts.

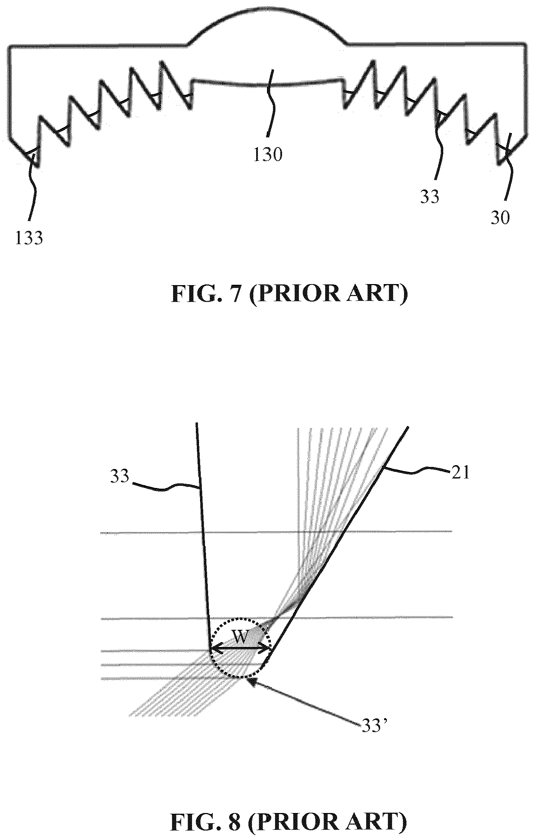

FIG. 7 schematically depicts a cross-sectional view of a mold 130 for producing a non-imaging optical element, here a Fresnel lens 30, e.g. through injection molding. The mold 130 typically comprises a plurality of recesses 133 defining the teeth of the Fresnel lens 30. The recesses 133 typically terminate in a sharp point as the teeth of the Fresnel lens 30 are typically designed to terminate in a sharp tip in order to achieve the desired optical performance of the Fresnel lens 30 produced, i.e. molded, in this manner. However, in reality during the molding process of the Fresnel lens 30 the recesses 133 of the mold 130 are not entirely filled, e.g. due to the viscosity of the unset polymer used as the lens material and early setting of the lens material before reaching the sharp end points of the recesses 133 of the mold 130. This results in a Fresnel lens 30 having concentric annular prisms or teeth 33 with tooth tips 33' that are deformed, i.e. the shape of these tips deviates from the desired sharp tips at the end of the teeth 33, as shown in FIG. 8. Consequently, the portion of the incident light 21 totally internally reflected by such a Fresnel tooth 33 suffers from optical aberrations introduced by the surface defect at the tooth tip 33', which aberrations appear in a light beam spot generated with the Fresnel lens 30. In FIG. 8, the surface defect at the tooth tip 33' is shown to be circular in nature by way of non-limiting example only. It should be understood that the surface defect, i.e. the deviation from the intended surface shape, may take any shape. Furthermore, in the context of the present application reference is made to a maximum surface deformation width W, which is the largest cross-sectional dimension of the surface defect across the Fresnel tooth 33.

One way of minimizing the impact of such surface defects on the optical performance of a non-imaging optical element such as a Fresnel lens 30 is to increase the width of the tapered features of the non-imaging optical element, e.g. the teeth or prisms 33 of a Fresnel lens 30. By widening such features, the size of the surface defect at the tapered or sharp end of such features can be minimized, thereby improving the optical performance of the non-imaging optical element. However, this increases the size of the non-imaging optical element, which is undesirable in particular in application domains in which a small form factor of the non-imaging optical element is required. In addition, a thicker optical element equates to more material being required for the manufacture of the optical element, which increases its cost. Another solution is to add a diffusing or scattering texture to the light exiting surface 34 of the Fresnel lens 30, e.g. on the lenslets 35. Although this suppresses the optical artefacts in its luminous output caused by the aforementioned surface defects, it compromises the definition of the light beam produced by the Fresnel lens 30, which is also undesirable. Moreover, the addition of such a diffuser functionality, e.g. in the form of frosting or the like, may complicate the large scale production of such a lens, due to the degradation of the manufacturing tooling such that the optical properties of the lenses can change depending on at which stage during the lifetime of the manufacturing tooling they are produced.

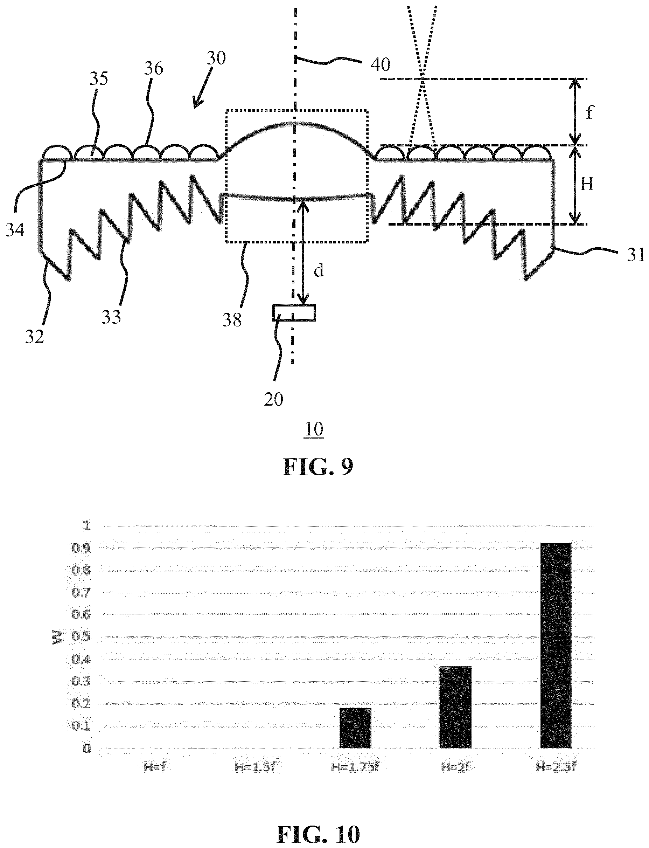

The present invention is based on the realization that the addition of an array of lenslets 35 on the light exiting surface 34 of the non-imaging optical element, e.g. the Fresnel lens 30, may be leveraged to suppress the optical artefacts in the luminous output of the non-imaging optical element caused by the surface defects at the light entry surface 32 of the non-imaging optical element, e.g. the deformations of the tips 33' of the Fresnel prisms or teeth 33. This is explained in more detail with the aid of FIG. 9, which schematically depicts a cross-sectional view of a lighting device 10 including a non-imaging optical element, here a Fresnel lens 30, according to an embodiment of the present invention. The lighting device 10 comprises a light source 20, e.g. a solid state lighting element such as LED, preferably a chip-on-board (COB) LED, positioned on the optical axis 40 of the non-imaging optical element, e.g. the Fresnel lens 30 at a distance d from the point of the light entry surface 32 through which the optical axis 40 extends. The lenslets 35 may be designed to convert a (near-) collimated luminous output generated by the body 31 of the non-imaging optical element, e.g. by the Fresnel prisms or teeth 33, into a light beam having a defined beam angle. It should be understood that where reference is made to the body 31 of the non-imaging optical element such as a Fresnel lens 30 being arranged to collimate light originating from a light source 20 such as a LED, this should be interpreted to mean that the non-imaging optical element has a single focal point, which causes light emitted from a point source positioned at this focal point to be collimated by the non-imaging optical element. In reality, because the light source 20 does not have an infinitely small light emitting surface, i.e. is not a point light source, the luminous output produced by the body 31 of the non-imaging optical element cannot be perfectly collimated, as will be readily understood by the skilled person.

In an embodiment, the lenslets 35 are arranged to generate a light beam having a beam angle in a range of 6-60°, preferably 6-36° in order to achieve a narrow beam angle that can generate a light beam having a small beam spot diameter when projected onto an object or surface, such that the lighting device 10 may be used for accent lighting. For example, the beam angle may be 6°, 12°, 18° or 30° by way of non-limiting example. Of course, the beam angle produced by the non-imaging optical element may be controlled in different ways, such as by altering the dimensions of the light emitting area of the light source 20 and/or the distance d of the light source 20 to the non-imaging optical element. The latter may be used to alter the étendue of the luminous output of the optical system, e.g. by altering the light losses (portion C in FIG. 6). By reducing the étendue of the optical system (i.e. by increasing such light losses), a particularly narrow beam may be produced at the cost of reduced optical efficiency of the optical system (i.e. the lighting device 10).

As is well-known per se, where the beam angle of the lighting device 10 is controlled with the lenslets 35, such lenslets 35 may be shaped accordingly to generate such a desired beam angle, typically by choosing the curvature of the lenslets 35 accordingly. This affects the focal length f of these lenslets, it will be readily understood by the skilled person. It has been realized that by choosing the minimum distance or height H between a surface defect on the light entry surface 32 of the non-imaging optical device, e.g. Fresnel lens 30, and the nearest apex 36 of a lenslet 35 as a function of the focal length f of the lenslets 35, the optical artefacts in the luminous output of the non-imaging optical element caused by such surface defects can be effectively suppressed. Specifically, when H > f, such as optical artefacts may be effectively suppressed depending on the magnitude of the maximum surface deformation width W. Specifically, as per the design rule shown in FIG. 10, when the maximum surface deformation width W is about 0.2 mm, H ≥ 1.75 ^{∗} f, whereas when the maximum surface deformation width W is about 0.4 mm, H ≥ 2 ^{∗} f, whereas when the maximum surface deformation width W is about 0.9 mm, H ≥ 2.5 ^{∗} f to avoid the presence of clearly visible aberrations in the luminous output of the lighting device 10. In other words, a larger ratio of H/f allows for larger defects at the light receiving surface 32 of the body 31 of the non-imaging optical device, e.g. at the tips 33' of the Fresnel prisms or teeth of the Fresnel lens 30, thus giving larger manufacturing tolerances at the cost of a more bulky non-imaging optical device. Hence, where a particularly compact non-imaging optical device is required, the manufacturing process must be more tightly controlled to ensure that the size of the surface defects is kept as small as possible. Generally speaking, the occurrence of optical artefacts in the luminous output of the lighting device 10 may be suppressed by controlling the width of the Fresnel teeth 33 and/or the overall thickness of the body 31 of the non-imaging optical element.

Commonly, a manufacturer of such non-imaging optical elements may produce a range of such elements to offer a range of products, e.g. a range of non-imaging optical elements producing light beams of different beam angles, e.g. beam angles in a range of 6-60°, in the range of 6-36°, such as non-imaging optical elements producing beam angles of 6°, 12°, 18°, 24°, 30°, 36° and so on. Such higher beam angles are typically reflected in a shorter focal length f of the lenslets 35. Therefore, it is advantageous to design the body 31 of the non-imaging optical element in accordance with the smallest desired beam angle within the product range, as this corresponds to the largest focal length of the lenslets 35 to be positioned on the body 31 in order to achieve the desired beam angle. Consequently, if the body 31 obeys the aforementioned design rules for the lenslets 35 having the largest focal length in the desired product range, the body 31 may be reduced for all other product in the product range, as for the other products the focal length f of the lenslets 35 thereon will be smaller than for the product (i.e. the non-imaging optical element) in the product range producing the smallest beam angle, e.g. a beam angle of 6°. Such reuse of the body 31 across the product range is particularly cost-effective because the mechanical interface is kept the same such that the reusability of the tooling for producing the non-imaging optical elements of the product range is dramatically increased.

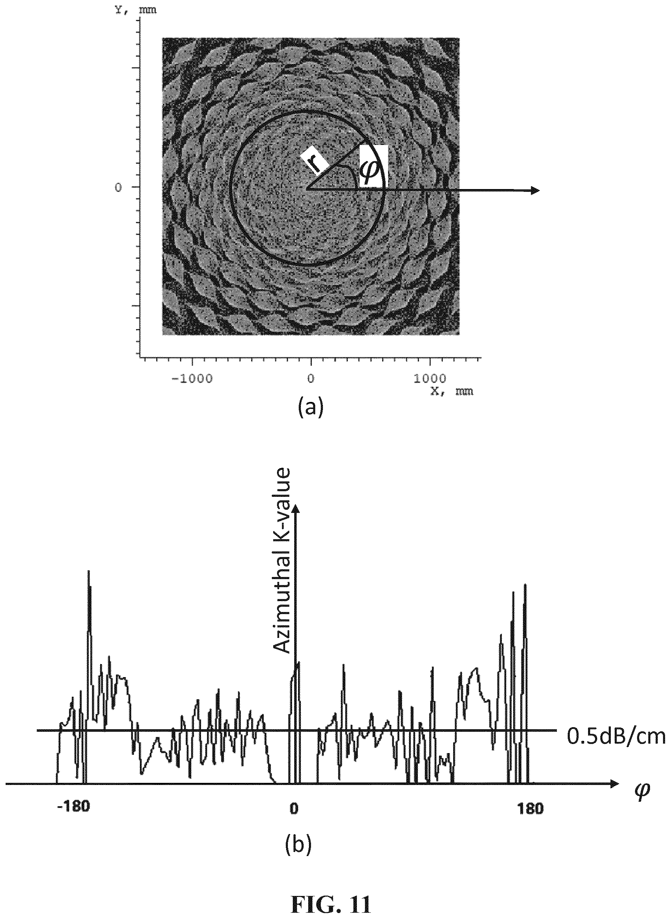

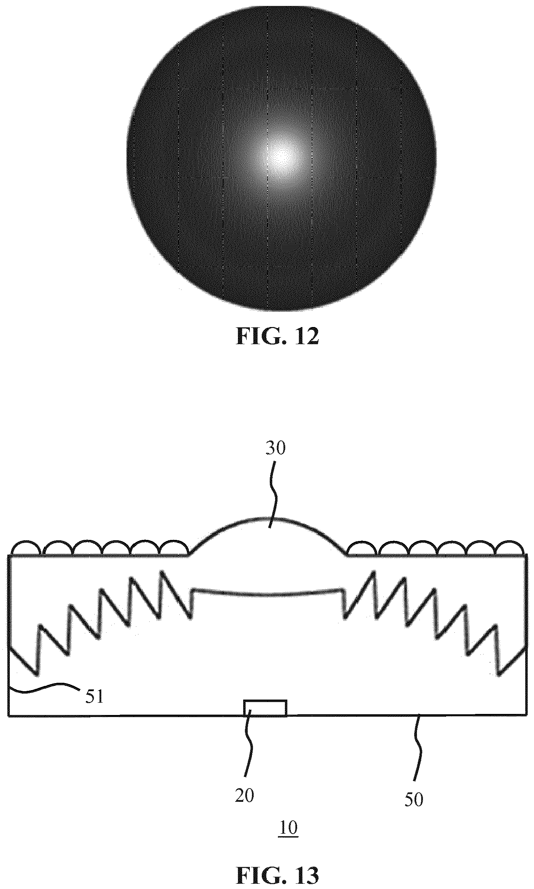

The effect of obeying the aforementioned design rule for such a non-imaging optical element is depicted in FIG. 11 and 12 respectively. FIG. 11(a) depicts a simulated image (with LightTools) in which the aforementioned design rule was not observed (W>0.4 mm and H = 1.75f). The artefacts in the depicted light spot as projected onto a white wall at 1 m from the lighting device 10 are clearly visible. Fig 11(b) depicts the azimuthal K-value of part of this light spot, which as is well known is an expression of the rotational symmetry of the light spot. As can be seen, large parts of this light spot have an azimuthal K-value in excess of 0.5dB/cm, which is considered a critical threshold for perceiving an aberration-free or homogeneous light spot, with values above this threshold indicative of visible loss of rotational symmetry causing visible optical aberrations or artefacts. In contrast, the homogeneous light spot depicted in FIG. 12 was obtained using a lighting device 10 comprising a Fresnel lens 30 designed in accordance with the above design rules, i.e. a lens producing a light beam having a beam angle of 12°.

FIG. 13 schematically depicts a lighting device 10 according to another embodiment of the present invention. The lighting device 10 comprises a housing 50 into which the light source 20 and the non-imaging optical element, e.g. the Fresnel lens 30 are housed. The housing 50 preferably comprises a light absorbent inner surface 51 such that light emitted by the light source 20 that is not incident on the light entry surface 32 of the non-imaging optical element (i.e. portion C as shown in FIG. 6) is absorbed by the housing 50. Any suitable light absorbent material, e.g. a black paint or the like, may be used on the inner surface 51. Alternatively, the inner surface 51 may be made of or comprise such a light absorbent material. This has the advantage that such stray light is not reflected onto the light entry surface 32 of the non-imaging optical element, where such stray light could interfere with the optical performance of the non-imaging optical element and degrade the quality of the light beam produced with this optical element. In the embodiments of the present invention, the lighting device 10 may take any suitable shape or form, such as for example a light bulb or the like. The lighting device 10 may form an integral or replaceable part of a luminaire, such as a spotlight or the like.

As will be understood from the foregoing, in designing the non-imaging optical element according to embodiments of the present invention, the overall thickness of the non-imaging optical element is a function of the defect size on the non-imaging optical element. Hence, a designer has the design freedom to either minimize the size of the surface defects, e.g. by minimizing the radius of the Fresnel teeth 33 in case of a Fresnel lens 30, or by increasing its height H or thickness. The former increases manufacturing challenges whereas the latter increases cost of the non-imaging optical element such that in practice a trade-off between these two freedoms is typically found.

An exemplary design method for designing such a non-imaging optical element, e.g. a Fresnel lens 30 carrying an array of lenslets 35 and lighting device 10 is now described in more detail by way of non-limiting example. The design method proceeds with an étendue calculation of the target optical system to evaluate if the desired narrow beam angle can be achieved within the specific boundaries of the diameter of the non-imaging optical element and the light emitting surface area of the light source 20. One of the advantages of the architecture of the non-imaging optical element according to embodiments of the present invention is that if the étendue of the light source 20 is bigger than the étendue of the non-imaging optical element, the effective étendue of the light source 20 may be reduced by increasing the distance d from the light source 20 to the non-imaging optical element at the cost of loss of optical efficiency, i.e. increased light losses as previously explained.

Next, the required lens function is calculated, e.g. the shape of the central region 38 and the Fresnel teeth or prisms 33 in case of a Fresnel lens 30, after which the lens structure, i.e. the body 31 is completed. The location of the first Fresnel tooth 33, i.e. the Fresnel tooth 33 proximal to the central region 38, is quite important to ensure the focal lens f of the lenslets 35 is less than the shortest distance from the surface deformation area, i.e. the tooth tip 33' to the apex 36 of the nearest lenslet 35. The number of Fresnel teeth 33 in the design may be governed by the maximum number of teeth that the tooling for producing the mold 130 can incorporate.

Next, the appropriate lenslet 35 (based on the desired beam angle) is calculated and added to the light emitting surface 34 of the body 31. The lenslets 35 may be distributed across the light emitting surface using any suitable distribution function to obtain an array of lenslets 35 producing the desired beam angle. The focal length f of the lenslets 35 may be used as an input for setting the minimum thickness of the non-imaging optical element, to ensure conformance with the aforementioned design rules.

The thus obtained design may be checked to determine if the design could be manufactured using molding techniques such as injection molding. If this is not the case, the input parameters of the design method may be adjusted and the non-imaging optical element may be redesigned accordingly. Once a moldable design has been obtained, the method may further comprise producing a mold in accordance with the obtained design and producing the non-imaging optical element using such a mold.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A non-imaging optical element (30) comprising a body (31) for collimating light from a light source (20), said body comprising a first surface (32) for receiving light from said light source and a second surface (34) opposing the first surface, said second surface carrying a lenslet array for reshaping said collimated light, the lenslet array comprising a plurality of lenslets (35), each lenslet having a focal length (f) and an apex (36) opposite said second surface, the first surface comprising at least one surface defect (33') causing an optical artefact in said collimated light, wherein a distance (H) between any of said surface defects and the apex of any lenslet is at least said focal length.

2. The non-imaging optical element (30) of claim 1, wherein the non-imaging optical element is arranged to generate a light beam having a beam angle in a range of 6-60°, preferably in a range of 6-36°.

3. The non-imaging optical element (30) of claim 2, wherein said distance (H) is at least the focal length (f) corresponding to a 6° beam angle.

4. The non-imaging optical element (30) of any of claims 1-3, wherein the non-imaging optical element is molded from an optical grade polymer.

5. The non-imaging optical element (30) of any of claims 1-4, wherein the non-imaging optical element is a Fresnel lens having an optical axis (40) and the first surface (32) comprises a plurality of annular concentric Fresnel teeth (33) around said optical axis.

6. The non-imaging optical element (30) of claim 5, wherein the Fresnel lens has a refractive central region (38) centered on said optical axis, and the annular concentric Fresnel teeth (33) are located around said central region.

7. The non-imaging optical element (30) of claim 5 or 6, wherein the surface defects (33') are deformations of the respective tips of the annular concentric Fresnel teeth (33).

8. The non-imaging optical element (30) of any of claims 5-7, wherein the Fresnel teeth (33) have a maximum tooth tip deformation width (W) of 0.4 mm, and said distance (H) is at least twice said focal length (f).

9. The non-imaging optical element (30) of any of claims 5-7, wherein the Fresnel teeth (33) have a maximum tooth tip deformation width (W) of 0.9 mm, and said distance (H) is at least 2.5 times said focal length (f).

10. A lighting device (10) comprising the non-imaging optical element (30) of any of claims 1-9 and a solid state light source (20) arranged to couple at least a fraction (A, B) of its luminous output (21) into the first surface (32) of the body (31) of the non-imaging optical element.

11. The lighting device (10) of claim 10, further comprising a housing (50) containing the solid state light source (20), said housing comprising a light absorbent surface (51) facing the solid state light source for absorbing a further fraction (C) of its luminous output (21) that is not coupled into the non-imaging optical element (30).

12. The lighting device (10) of claim 10 or 11, wherein the solid state light source (20) is in a LED chip-on-board form.

13. A luminaire comprising the lighting device (10) of any of claims 10-12.

14. A method of designing a non-imaging optical element (30) comprising a body (31) for collimating light from a light source (20), said body comprising a first surface (32) for receiving light from said light source and a second surface (34) opposing the first surface, said second surface carrying a lenslet array for reshaping said collimated light, the lenslet array comprising a plurality of lenslets (35), each lenslet having a focal length (f) and an apex (36) opposite said second surface, the first surface comprising at least one surface defect (33') causing an optical artefact in said collimated light, wherein a distance (H) between any of said surface defects and the apex of any lenslet is at least a critical focal length, the method comprising:
providing a design of said body by:
calculating the dimensions of the body as a function of said critical focal length and a desired light efficiency of said light source; and
adding the lenslet array to the second surface of said body, wherein said focal lengths do not exceed the critical focal length.

15. The method of claim 14, wherein the non-imaging optical element (30) is a Fresnel lens having an optical axis (40) and the first surface (32) comprises a plurality of annular concentric Fresnel teeth (33) around said optical axis, the method further comprising defining said distance as a function of the maximum tooth tip deformation width (W) of said Fresnel teeth.
